# EUROPEAN PATENT SPECIFICATION

(11) **EP 3 970 484 B1**
(45) Date of publication and mention of the grant of the patent: **02.04.2025**
(21) Application number: 21197472.0
(22) Date of filing: 17.09.2021
(51) Int. Cl.: A01K 31/18, A01K 41/00

(54) **SYSTEM AND METHOD FOR INCUBATING AND HATCHING EGGS**
SYSTEM UND VERFAHREN ZUM INKUBIEREN UND SCHLÜPFEN VON EIERN
SYSTÈME ET PROCÉDÉ POUR L'INCUBATION ET L'ÉCLOSION D'OEUFS

(30) Priority: 18.09.2020 NL 2026500; 30.10.2020 NL 2026799
(43) Date of publication of application: 23.03.2022
(73) Proprietor: Mach-C B.V., 7131 MP Lichtenvoorde (NL)
(72) Inventor: PONDES, Christian, 7131 MP Lichtenvoorde (NL)
(74) Representative: EDP Patent Attorneys B.V.

(56) References cited:
- EP-A1- 2 873 319
- WO-A1-2018/156026
- DE-U1- 202017 002 530
- US-A- 3 396 703

## Description

### FIELD OF THE INVENTION

The invention relates to a system for incubating and hatching eggs. The invention also relates to a use of the system. Further, the invention relates to a method for incubating and hatching eggs.

### BACKGROUND OF THE INVENTION

Systems for incubating and hatching eggs are known. EP2873319, for instance describes a poultry house comprising a poultry house floor, a ceiling and/or roof, and an incubator device for eggs comprising an egg carrier for carrying the eggs during the incubation process, as well as first distance-to-floor setting means for retaining the egg carrier at a distance above the poultry house floor, characterized in that the first distance-to-floor setting means comprising a suspension system by which the egg carrier is suspended from a ceiling or roof of the poultry house, which poultry house further comprises first adjusting means by which the egg carrier can be suspended at various adjustable heights above the poultry house floor, where in an incubation state the distance (D1) to the poultry house floor is such that the heat/cold radiation from the poultry house floor does not have adverse effects on the incubation of the eggs and/or development of the chicks, and where in a hatching state the distance (D2) to the poultry house floor is such that the newly hatched chicks can drop or climb onto the poultry house floor or a receiving plate positioned above the floor without experiencing any bodily harm, where in the incubation state the distance to the poultry house floor is larger than in the hatching state.

WO2018/156026 describes transport system has a rail with an inclined rail section. Over the rail, wheeled carriers can be pushed which are coupled to a hatching frame. A passage flap can temporarily hold a carrier and opens when a carrier is pushed against the flap. On each carrier two cams are present between which the passage flap is in the holding position. When placing a hatching frame in the transport system, first a carrier is placed under the passage flap on the rail and the passage flap is then closed manually. Then a second carrier is placed on the sloping rail section. The second carrier will run against stops under the influence of gravity. Then the hatching frame is placed on the carriers and the whole can be pushed over the rail.

DE202017002530 describes a transfer machine for transferring hatched eggs, the transferring machine comprising a series of egg-receiving members for receiving and transferring the hatched eggs, characterized in that the transferring machine is designed to drive through a poultry house and in the process picking up the hatched eggs by means of the egg pick-up members and placing them on a layer of insulating covering material in the poultry house.

US3396703A discloses a unit for hatching poultry eggs including an enclosure having a perforate floor over which a conveyor belt narrower than the floor traverses. A perforate floor area is provided on either side of the belt to allow hatched chicks to stand and feed from suitably placed feed and water troughs.

### SUMMARY OF THE INVENTION

In poultry industry, the current standard is to brood fertilized eggs until hatching and then transport newly hatched chicks, also referred to as "one day old chicks", to a poultry house at a farm. The chicks are usually fed for the first time after arrival in the poultry house.

It appears desirable to provide the chicks with one or more of water, feed, and light directly after they have hatched. Especially, all may be provided. In embodiments, feed and water may be combined. In specific embodiments, it appears desirable to provide the chicks at least feed after they have hatched. This early feeding may lead to healthier chicks, a reduction in the use of antibiotics and better feed conversion.

Transferring fertilized eggs to a poultry house prior to hatching may provide the chicks to access one or more of feed, water, and light directly after hatching. On the other hand, hatching in the poultry house introduces challenges for farmers, for example removal of possible waste, such as egg shells, after hatching.

Hence, it is an aspect of the invention to provide an alternative system and method as defined in the independent claims which preferably further at least partly obviate(s) one or more of above-described drawbacks. The present invention may have as object to overcome or ameliorate at least one of the disadvantages of the prior art, or to provide a useful alternative.

In a first aspect, the invention provides a system for incubating and hatching eggs as defined in the accompanying claims.

The system may be placed in a poultry house. In this way, in the poultry house, the chicks may have immediate access to feed and water, which may be beneficial for their health. Also, transportation of newly hatched chicks, may be avoided. The system may be height adjustable, therefore the incubation and hatching of the eggs may be performed at a desired height whereas any manual labor may be performed at a different height and when the system is not in use, it may be raised towards a roof. In this way, the system may not hinder the use of the poultry house for raising the chicks. A plurality of individual, fertilized eggs may be placed in the system and then shifted such that the eggs are distributed along the system. In embodiments, the eggs may be placed in direct contact with the egg carrier. This may enable automated waste collection (after hatching), leading to a reduction in manual labor and costs.

For the health and safety of the chicks, it seems desirable to keep the eggs and chicks close to the floor in order to prevent failures or injuries that may be caused by falling or jumping of the system. In contrast, some steps in the brooding and hatching process currently still require manual labor, it may be especially beneficial for workers to be able to perform their tasks at a convenient working height, such as standing or sitting. Such a way of working may be faster and may be better in terms of health and safety. Therefore, in embodiments, at least part of the egg transport system may be movable in a vertical direction. In embodiments, the egg transport system may comprise a support element, wherein the support element comprises at least part of the track. Especially, the support element is configured to support at least part of the egg carrier. In embodiments, the support element is movable in the vertical direction.

Working height may be defined as a height at which workers may perform the manual labor with minimal risk at injuries. In embodiments, working height may be in the range of 60-120 cm above a floor, especially in the range of 80-110 cm above the floor.

After hatching, the chicks may leave their egg shells behind on the egg carrier. Some eggs may not hatch. For hygienic reasons, it may be important to remove these egg shells and possible un-hatched eggs from the system. Such waste collection may often be done by workers picking waste from the floor. This approach causes the waste collection step to be one of the more laborious, more time consuming, more expensive steps in the process. Therefore it may be desirable to improve this step.

In embodiments, the transport system of the present invention, may be used to transfer such possible available waste on the egg carrier to the first zone. In embodiments, the waste may then be manually transferred from the first zone to a waste collection device. In alternative embodiments, the system may be used to transfer possible available waste on the egg carrier to the second zone. In embodiments, the waste may then be manually transferred from the second zone to a waste collection device. Especially, the top of the support element may be placed at working height. In specific embodiments, the system may be configured to move the egg carrier in a downward direction to allow possible available waste on the egg carrier to be removed from the egg carrier by gravitational force in the waste collection device. In specific embodiments, the egg carrier may be bended away from a horizontal plane.

In embodiments, the waste may be removed from the egg carrier with an actuator. In embodiments, a motorized wiper (or "wiper element") may be applied.

Especially, in embodiments, the egg carrier may be rolled up on the first carrier support. In alternative embodiments, the egg carrier may be rolled up on the second carrier support. In this way, the possible available waste may be collected automatically, without human labor being involved. Such automatic waste collection may especially be possible because the individual eggs (and thus the waste after hatching) may be placed on the egg carrier without any further support (see below).

Alternatively or additionally, the system may further comprise a waste collection system, wherein the waste collection system is configured to transfer waste from the egg carrier in a waste collection device. In embodiments, the waste collection system may comprise a fixed element that upon moving the egg carrier towards the first zone or towards the second zone, may guide the waste into the waste collection device. In embodiments, the waste collection system may comprise one or more of a wiper, that may be configured to transfer the waste to the waste collection system. In specific embodiments, a waste collection system may comprise a system that may detect and optionally count any un-hatched eggs and transfer the possible un-hatched eggs and available waste into a waste collection device.

In embodiments, a plurality of eggs may be carried by the egg support element, such as a tray. The egg support element comprising the eggs may be placed in the egg transferring system, which is configured to transfer the plurality of individual eggs from the egg support element to the egg carrier, especially in the placing zone. In the present invention, such egg support elements may not be used during the incubating and hatching steps. Hence, the egg support elements may not get dirty by the chicks and may be cleaned easily. Also, the egg support elements may be quickly available for a new round of loading the system as they may be removed from the system once loading has finished. The egg support elements may immediately be returned to a provider of the fertilized eggs, in this way only one round of transportation from brooding location to poultry house and back to the brooding location may be needed. In embodiments, the egg transferring system may comprise a plurality of movable suction units to individually lift eggs from the egg support element, and transfer the individual eggs without any further support of the eggs to the egg carrier. Especially, the individual eggs do not require any further support. Especially because the eggs may be directly lying on the egg carrier without any further support, the waste collection (described above) may be automated in this invention.

In embodiments the system may be configured to execute a plurality of loading stages. Especially, each loading stage may comprise a transferring action and a moving action, wherein in the first zone, in the placing zone, a part of the egg carrier is provided with a plurality of eggs during the transferring action, and the part of the egg carrier is moved in a direction of the second zone during the moving action, whereby a next part of the egg carrier is introduced in the first zone. In this way, eggs may be distributed along the entire track or along parts of the track. In embodiments, the egg carrier may be occupied with eggs from the first zone to the second zone. Hence, the term "loading stage" may also refer to a plurality of loading stages, including sequences of a transferring action and a moving action. Thereby, a substantial part of the egg carrier supported by the support element may be achieved.

Hence, the system, including the egg transferring system, may be configured to load the egg carrier in a plurality of loading stage with eggs. During the (sequential) loading stages, especially the egg transferring system and the support system may essentially be stationary relative to the floor.

In embodiments, the egg transferring system may further comprise a movable barrier that is configured to prevent eggs on the egg carrier from rolling back into the first zone. Especially, a movement of the barrier may be mechanically coupled to a movement of the egg carrier. In this way, the placing zone remains available for a next loading stage.

In embodiments, the egg placing zone may be defined by a length L and a width W. In embodiments, L may be in the range of at least 30 cm, like at least 50 cm. In embodiments, L may be at maximum 150 cm, like at maximum 125 cm, such as at maximum 120 cm. In embodiments, L may be in the range of 30-125 cm, like 30-120 cm, especially in the range of 50-120 cm, such as in the range of 50-100 cm. However, other dimensions may also be possible.

In embodiments, W may be in the range at least 30 cm, such as at least 50 cm. In embodiments, W may be at maximum 150 cm, like at maximum 125 cm, such as at maximum 120 cm. In embodiments, W may be in the range of 30-125 cm, like 30-120 cm, especially in the range of 50-120 cm, such as in the range of 50-100 cm. However, other dimensions may also be possible.

It seems desirable to place eggs onto the egg carrier and not on top of one another. This may be achieved by selecting a moving distance D in relation to the dimensions of the egg placing zone, wherein the dimensions of the egg placing zone correspond to the dimensions of the egg support element. Especially, by moving the egg carrier from the first zone to the second zone over moving distance D that is equal to or larger than length L of the placing zone. In this way, the placing zone is empty and available for a subsequent transferring action.

In embodiments, it may be desirable to distribute a specified number of eggs over the full length of the egg carrier. This may be achieved by leaving empty spaces of egg carrier in between the eggs of subsequent transferring stages. Therefore, the moving distance D may be larger than the length L of the placing zone. Thus, in embodiments, the moving action comprises moving part of the egg carrier over a distance D equal to or larger than the length L of the placing zone. Thus in embodiments, D≥L. Selecting a moving distance D in relation to L determines a number of eggs per meter egg carrier. In embodiments D=L, then there may be no empty spaces between the eggs from subsequent loading stages. In this way, the maximum number of eggs may be placed on the egg carrier. In embodiments D>L, then empty spaces between the eggs from subsequent loading stages may be present. In embodiments D-L≥3 cm, in specific embodiments D-L≥5 cm, especially D-L≥10 cm, such as D-L≥20 cm. In embodiments D-L≤100 cm, especially D-L≤50 cm. Selecting D in relation to L may provide control over the distribution of eggs over the egg carrier.

In embodiments, the egg carrier and the support element may comprise a linear shape in a horizontal plane. Such a shape may be convenient for placing in a poultry house. A length and the width of the egg carrier and support element may be selected depending on sizes of the poultry house. Especially, the sizes of the poultry house (in combination with farming conditions) define a number of chicks to raise in the poultry house. This will be evident for a person skilled in the art. The desired number of chicks then defines the minimum length of the track that is needed for the corresponding number of eggs to incubate and hatch on the system. The length and the width of the egg carrier and support element may be selected depending on sizes of the egg support element. In embodiments, a plurality of systems may be placed in a poultry house. These systems may be sequentially loaded using the same transferring system. Alternatively, each system may use a separate transferring system.

One or more of the eggs is at least partly in direct contact with the egg carrier. In embodiments, some nesting materials, for example straw, hay, wood shavings, etc. may be placed on the egg carrier. The use of such nesting materials may not interfere with the waste collection if such materials may be collected together with the possible available waste such as egg shells.

The egg carrier comprises a conveyor belt. In embodiments, the conveyor belt may comprise one or more of (i) aramid, (ii) ethylene-propylene-(diene-)terpolymer, (iii) natural fiber, (iv) natural rubber, (v) nitrile-butadiene rubber, (vi) polyester, (vii) polyvinylchloride, (viii) silicone rubber, (ix) thermoplastic copolyester, (x) thermoplastic polyurethane, and (xi) polypropylene. In specific embodiments, the conveyor belt may comprise polypropylene. In embodiments, the egg carrier may comprise a meshed structure. In embodiments, the egg carrier may be perforated. The egg carrier is linear, thus comprising a beginning and an end. Especially, the linear egg carrier may be of less weight compared to the circular egg carrier. This may lead to a longer egg carrier having less weight. Additionally, a circular egg carrier may require a length specific for the length of the track of the system. The linear carrier may be longer than the track as the remaining part of the carrier may remain rolled up on a carrier support. Hence, a linear carrier may be used on systems having different track lengths. In embodiments, the egg carrier may be biodegradable. In this way, the egg carrier may be discarded together with possible biological waste on the egg carrier.

As indicated above, the egg transport system may especially be configured to move in an operational mode of the system the egg carrier along a track from the first zone to a second zone. Hence, the egg carrier may be moved from a first zone to a second zone. Especially, the movement may be in a horizontal plane. Especially over at least part of the track, the movement may be in the horizontal plane.

As indicated above, the first zone comprises se an egg placing zone. The second zone may comprise at least part of the egg carrier. Further, the second zone may comprise at least part of the support element is configured to support at least part of the egg carrier.

In embodiments, the egg carrier may have a length at least 5 m, such as at least 10 m. Even more especially, the length of the egg carrier may be at least 20 m, such as at least 40 m. In embodiments, the length of the egg carrier may be selected from the range of about 60-120 m, like in specific embodiments selected from the range of about 70-100 m. The length of the egg carrier may essentially be the length of the track. Hence, the minimum length of the track that is needed for the corresponding number of eggs to incubate and hatch on the system may be about 5 m, such as at least 10 m, like especially at least 20 m, such as at least 40 m, like selected from the range of 60-120 m. Hence, in embodiments the horizontal length along which the eggs may be transported may be at least 20 m for the set of eggs that travel the longest distance determined from the egg placing zone, such as even up to about 120 m. Hence, after at least part of the loading stage, or after the entire loading stage, a plurality of eggs may be distributed over a length of about at least 5 m, such as at least 10 m, like especially at least 20 m, such as at least 40 m, like selected from the range of 60-120 m, on the egg carrier. In embodiments, the density of the eggs on the egg carrier may be in the order of at least about at least 1 egg per 2 dm², such at least about 1 egg per 1 dm²,

The claimed system comprises a first carrier support wherein the first carrier support is configured in the first zone, wherein during the operational mode, the system is configured to unroll the egg carrier from the first carrier support. In embodiments, the egg carrier may be rolled onto the first carrier support for waste collection. Additionally or alternatively, the system may comprise a second carrier support wherein the second carrier support is configured in the second zone. In embodiments, during the operational mode, the system is configured to roll the egg carrier on the second carrier support. In embodiments, the egg carrier may be rolled onto the second carrier support for waste collection.

The conveyor belt may during part of the time move in a first direction and during another part of the time move in an opposite direction. For instance, at least part of the conveyor belt may be unrolled during movement in the first direction or in the opposite direction, and at least part of the conveyor belt may be rolled-up during movement in the opposite direction or in the first direction.

While propagating in one direction the egg carrier, especially the conveyor belt may be filled with eggs. When a substantial part of the eggs have hatched, the remaining material may be removed from the egg carrier. For instance, the conveyor belt may further propagate in the one direction, such that substantially all remaining material may fall from the conveyor belt. By gravitational force the waste may e.g. fall in a waste collection device. Alternatively or additionally, by using a wiper the waste may at least partially be removed from the egg carrier, such as a conveyor belt. In embodiments, the egg carrier, especially the conveyor belt, may propagate in an opposite direction after hatching of the eggs, while removing at least part of the waste and/or after remove at least part of the waste on the egg carrier.

In embodiments, the system may further comprise a cleaning device configured for cleaning the egg carrier. In this way, the egg carrier may be reused while maintaining high hygienic standards. In embodiments, the cleaning device may comprise a wiper element.

In embodiments, the poultry house may comprise a sensor. In embodiments, the sensor may be placed on the floor of the poultry house. Additionally or alternatively, the sensor may be placed at a wall of the poultry house. Additionally or alternatively, the sensor may be placed at the roof of the poultry house. In embodiments, the sensor may be functionally connected to the system. In embodiments, the system may comprise a sensor functionally connected to a control system. In embodiments, the sensor may be placed on the system. In embodiments, the sensor may be placed on the egg carrier. In embodiments, the sensor may be placed in physical contact with one or more eggs. In embodiments, the sensor may be moved together with the eggs on the egg carrier. In embodiments, the sensor may be placed on the system, but not on the egg carrier. Especially, such sensor may be configured to sense a parameter and to generate a related sensor signal. In embodiments, the parameter may comprise one or more parameters selected from the group consisting of an ambient temperature, an ambient humidity, a light intensity, a CO₂ level, an egg shell temperature, number of chicks, and chick behavior. In embodiments, the control system may be configured to send the related sensor signal to a remote device. Additionally or alternatively, the control system may be configured to control the system in dependence of the sensor signal. Hence, in specific embodiments, the system may comprise a sensor functionally connected to a control system, wherein the sensor is configured to sense a parameter and to generate a related sensor signal. In embodiments, the control system may be configured to execute one or more of the following actions: (i) send the related sensor signal to a remote device, and (ii) control the system in dependence of the sensor signal, wherein the parameter comprises one or more parameters selected from the group consisting of an ambient temperature, an ambient humidity, a light intensity, a CO₂ level, an egg shell temperature, number of chicks, and chick behavior. The term "sensor" may relate to a plurality of sensors.

In embodiments, a poultry house comprises the claimed system. The fertilized eggs may be transported to the poultry house and loaded into the system. Hatching may then take place in the poultry house and the chicks may have quick access to feed and water.

In embodiments, the poultry house may comprise a suspension system configured to suspend at least part of the system at an adjustable height within the poultry house, including one or more of (a) on the floor, (b) working height, and (c) above working height, especially higher than 2 meters from the floor, like at least 2.5 m. In embodiments, the suspension system may be configured to suspend the support element at the adjustable height within the poultry house. During incubating and hatching of the eggs, the system may be placed on the floor. In embodiments, the egg carrier may be less than 50 cm above the floor, especially less than 20 cm above the floor. In this way, the chicks may be less likely to get hurt by getting off the system. During waste collection, at least part of the system, especially the egg carrier, may be placed at working height for convenience of the workers. In embodiments, at least part of the system, such as the support element, may be lifted above working height after incubating, hatching and waste collection. In this way, the system may not hinder the normal use of the poultry house. Lifting may e.g. be done with one or more winches. Hence, in embodiments the system may comprise one or more winches. The winches may be used to control the height of the support element (over a floor). In specific embodiments, the suspension system may comprise the one or more winches.

The support element may in embodiments rest on the floor (at least during the hatching period). In other embodiments, the support element may rest on a second support element. Such second support element may also facilitate a fixation of the support element in at least one horizontal direction, more especially in two perpendicular horizontal directions. One or more second support elements may be applied. Especially, a plurality of second support elements may be applied to provide a fixed vertical position of the support element relative to the floor. The support element may be lifted from the second support element in a direction away from the floor. Hence, in embodiments the system may further comprise one or more second support elements configured to support the support element. In this way, the support element does not need to rest on the floor. This may increase useful area in an animal residence, such as a poultry house.

Alternatively or additionally, a bridging element may be used to bridge the height of the support element to the floor. This may facilitate the descent of the hatched chicks from the egg carrier to the floor and/or the ascent of the hatched chicks from the floor to the support element. Such bridging element may comprise stairs or may be slanted. In specific embodiments, the second support element may comprise the bridging element.

In embodiments, the support element may be on a floor, such as on a floor of a poultry house, especially during a period that the eggs are hatching. After hatching, however, the support element may be lifted from the floor and be suspended over the floor. A first elevated position of the support element may be used to remove waste from the egg carrier. This may especially be a working height (see also above). Alternatively or additionally, a second elevated position of the support element may especially be higher than 2 meters from the floor.

In an elevated position, which may be the first elevated position, the support element may be supported by one or more second support elements. In combination with bridging elements, the hatched chicks may enter the support element. In this way, the area for the chicks is increased. Further, the freedom of the chicks is increased, which may be beneficial for their wellbeing. The combination of the elevated support element and the bridging elements, may increase the area for the chicks in embodiments with at least 5%, such as even at least about 10%, relative to area of the floor (without the support element).

**In** another aspect, the invention provides an egg brooding method as defined in the accompanying claims. The method comprises a loading stage, comprising placing a plurality of individual eggs onto an egg carrier, wherein one or more of the eggs is at least partly in direct contact with the egg carrier. Especially, the egg carrier may comprise a conveyor belt. The method further comprises an incubation and hatching stage, allowing the eggs to incubate and hatch. The method further comprises a waste removal stage, comprising removing possible available waste on the egg carrier. The egg brooding method is applied with the herein described system and may especially be executed in the herein described poultry house.

**In** embodiments, the egg carrier may be supported by a support element, wherein a height of the support element and thus the height of the egg carrier may be adjustable.

In embodiments, the incubating and hatching stage may be performed in a poultry house.

In embodiments, the method may comprise a pre-incubation stage and a transportation stage prior to the loading stage. Especially, the pre-incubation stage may comprise brooding the eggs for a maximum of 19 days, such as 14-18 days, like 15-18 days, outside of the poultry house, and the transportation stage may comprise transporting the eggs to the poultry house. In this way, in the poultry house, the chicks may have access to one or more of water, feed and light immediately after hatching. This may have health benefits for the chicks.

In embodiments, the method may comprise performing the incubating and the hatching of the eggs on the egg carrier at a height H from a floor, wherein H≤75cm, such as H≤50cm, especially wherein H≤20cm.

In embodiments, the method may further comprise a cleaning stage, comprising cleaning of the egg carrier by a cleaning device. In this way, the egg carrier may be reused while maintaining high hygienic standards. In embodiments, after cleaning, the egg carrier may be rolled onto a carrier support. The cleaning stage may comprise the waste removal stage.

In embodiments, the method comprises that after the waste removal stage at least part of the egg transport system, such as the support element, may be lifted above working height until the next loading stage is commencing.

The embodiments described above in relation to the system of the present invention, may also apply for the method and use of the invention.

Herein further a use of the system is described. During use the system may comprise the supporting element. In embodiments, the supporting element may be used at a first height h1 during the waste removal stage, and wherein after the waste removal stage, the supporting element may be raised in height at a second height h2, wherein h2>h1, and wherein the first height h1 is selected from the range of 60-120 cm above the floor, especially 70-120 cm above the floor, wherein the first height h1 is defined as the height of the track over the floor.

### BRIEF DESCRIPTION OF THE DRAWINGS

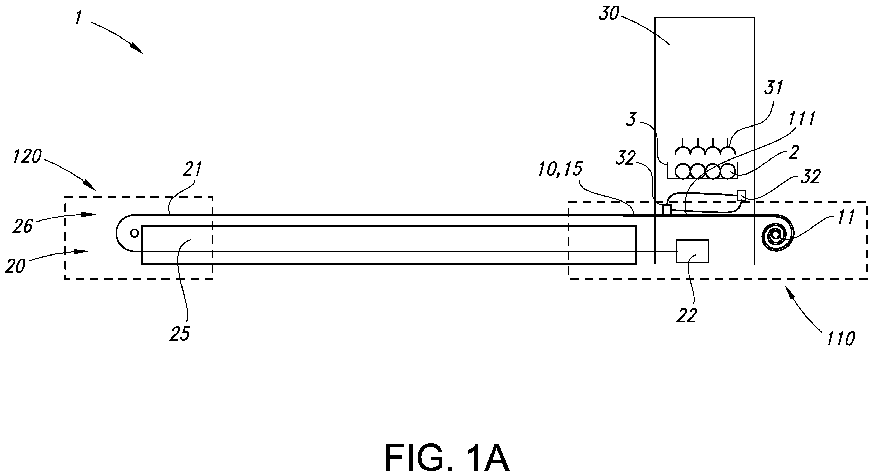

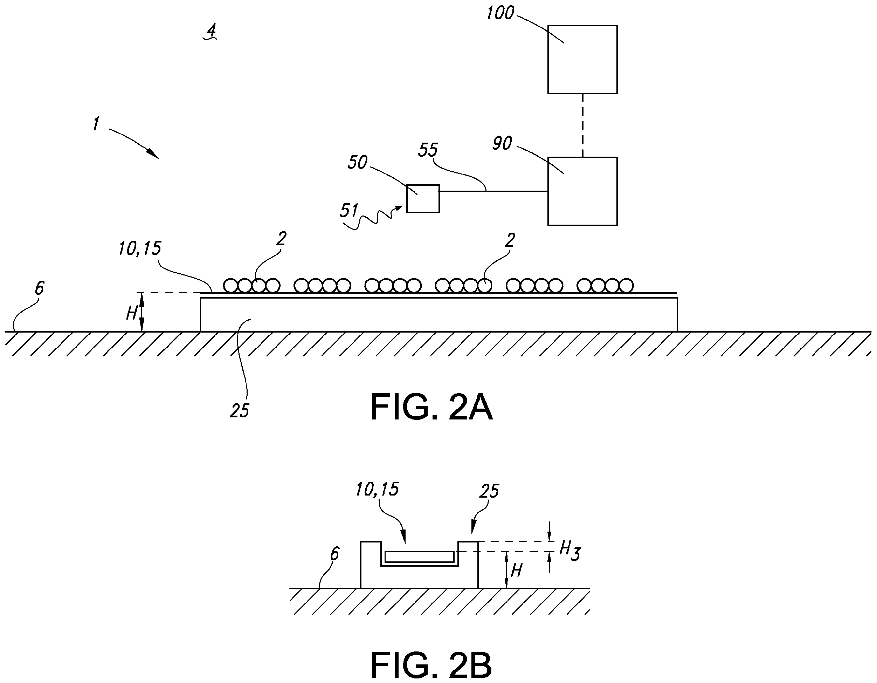

Embodiments of the invention will now be described, by way of example only, with reference to the accompanying schematic drawings in which corresponding reference symbols indicate corresponding parts, and in which: Figs. 1A-1C schematically depict an embodiment of the system of the invention; and Figs 2-4 schematically depict some further aspects of the invention. The schematic drawings are not necessarily to scale.

### DETAILED DESCRIPTION OF THE EMBODIMENTS

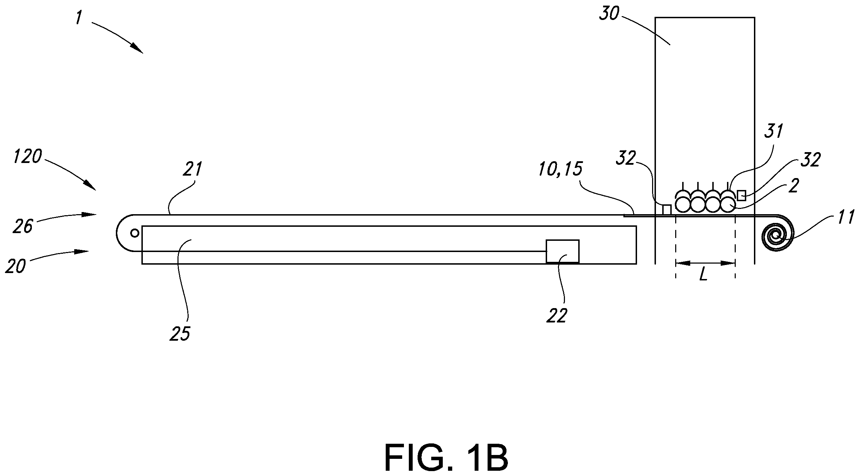

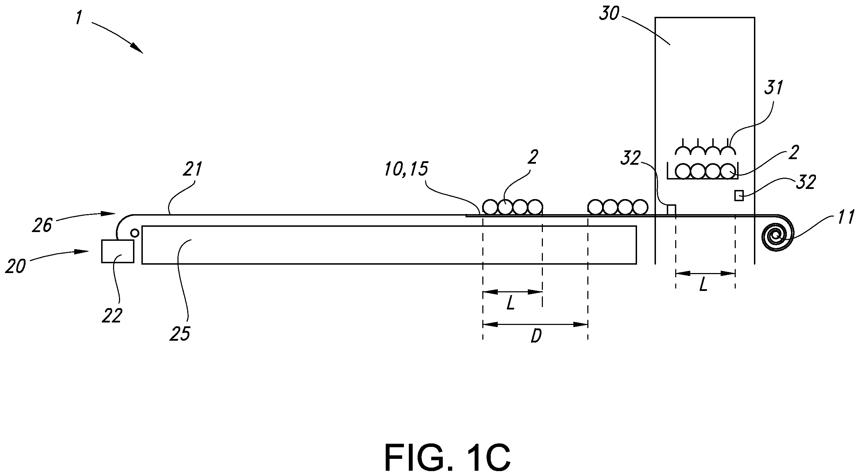

In a first aspect, the invention provides a system 1 for incubating and hatching eggs 2. Further, the invention provides an egg brooding method. Figs. 1A-C depict the system 1 during different stages of loading the system 1. The system 1 comprises a first zone 110, wherein the first zone 110 may comprise an egg placing zone 111. The system 1 further comprises an egg carrier 10, wherein the egg carrier 10 is configured to carry the eggs 2 during incubation and hatching. The egg carrier 10 comprises a conveyor belt 15. Further, the system 1 comprises an egg transport system 20, wherein the egg transport system 20 is configured to move in an operational mode of the system 1 the egg carrier 10 along a track 26 from the first zone 110 to a second zone 120. In embodiments, a motor unit 22 may be mechanically connected to the egg carrier 10 using a cable 21. In embodiments, the motor unit 22 may be positioned near the first zone 110, as depicted in Fig 1A. Alternatively, as depicted in Fig 1B, the motor unit may be positioned under the support element 25. Alternatively, as depicted in Fig 1C, the motor unit 22 may be positioned near the second zone 120. In embodiments, the motor unit 22 may be positioned on the floor 6 of the poultry house 4. In embodiments, the motor unit 22 may be positioned at a wall of the poultry house 4. However, other positions of the motor unit 22 are also possible.

As schematically depicted in Fig. 1a, the conveyor belt may during part of the time move in a first direction and during another part of the time move in an opposite direction. For instance, at least part of the conveyor belt may be unrolled during movement in the first direction or in the opposite direction, and at least part of the conveyor belt may be rolled-up during movement in the opposite direction or in the first direction.

The system 1 comprises an egg transferring system 30, wherein the egg transferring system 30 is configured to transfer eggs 2 from an egg support element 3 onto the egg carrier 10 in the egg placing zone 111 such that the eggs are carried by the egg carrier 10. Fig 1A depicts eggs 2 in the egg support element 3 prior to placing in the placing zone 111. Fig 1B schematically depicts embodiments wherein the egg transferring system 30 may comprise a plurality of movable suction units 31 to individually lift eggs 2 from the egg support element 3, and transfer the individual eggs 2 without any further support of the eggs to the egg carrier 10. In embodiments, the system 1 may be configured to execute a plurality of loading stages. Especially, each loading stage may comprise a transferring action and a moving action, wherein in the first zone 110 a part of the egg carrier 10 is provided with a plurality of eggs 2 during the transferring action, and the part of the egg carrier 10 is moved in a direction of the second zone 120 during the moving action, whereby a next part of the egg carrier 10 is introduced in the first zone 110, as depicted in Fig. 1C. In embodiments, the egg transferring system 30 may further comprise a movable barrier 32 that is configured to prevent eggs 2 on the egg carrier 10 from rolling back into the first zone 110. Especially, a movement of the barrier 32 may be mechanically coupled to a movement of the egg carrier 10. In depicted embodiments, the egg carrier 10 and the support element 25 may comprise a linear shape in a horizontal plane. One or more of the eggs 2 is at least partly in direct contact with the egg carrier 10. Furthermore,, the egg carrier 10 comprises a conveyor belt 15. In embodiments, the conveyor 15 belt may comprise one or more of (i) aramid, (ii) ethylene-propylene-(diene-)terpolymer, (iii) natural fiber, (iv) natural rubber, (v) nitrile-butadiene rubber, (vi) polyester, (vii) polyvinylchloride, (viii) silicone rubber, (ix) thermoplastic copolyester, (x) thermoplastic polyurethane, and (xi) polypropylene. In specific embodiments, the conveyor belt 15 may comprise polypropylene. In embodiments, the system 1 may comprise a first carrier support 11 wherein the first carrier support 11 is configured in the first zone 110, wherein during the operational mode, the system 1 is configured to unroll the egg carrier 10 from the first carrier support 11. In embodiments, the egg carrier 10 may be biodegradable. In this way, the egg carrier 10 may be discarded together with possible biological waste 41 on the egg carrier.

Figs. 2a-2b schematically depict embodiments of the incubating and hatching stage. In embodiments, a poultry house 4 may comprise the system 1. In embodiments, the system 1 may comprise a sensor 50 functionally connected to a control system 90, wherein the sensor 50 is configured to sense a parameter 51 and to generate a related sensor signal 55. In embodiments, the control system 90 may be configured to execute one or more of the following actions: (i) send the related sensor signal 55 to a remote device 100, and (ii) control the system 1 in dependence of the sensor signal 55, wherein the parameter 51 comprises one or more parameters selected from the group consisting of an ambient temperature, an ambient humidity, a light intensity, a CO₂ level, an egg shell temperature, number of chicks, and chick behavior.

The method comprises an incubation and hatching stage, allowing the eggs 2 to incubate and hatch. In embodiments, the method may comprise performing the incubating and the hatching of the eggs 2 on the egg carrier 10 at a height H from a floor 6, wherein H≤75cm, such as H≤50cm, especially wherein H≤20cm.

In embodiments, the egg carrier 10 may be supported by a support element 25, wherein a height of the support element 25 and thus the height of the egg carrier 10 may be adjustable. In embodiments, the incubating and hatching stage may be performed in a poultry house 4. In embodiments, the method may comprise a pre-incubation stage and a transportation stage prior to the loading stage. Especially, the pre-incubation stage may comprise brooding the eggs 2 for a maximum of 19 days, such as 15-18 days, outside of the poultry house 4. The transportation stage may comprise transporting the eggs 2 to the poultry house 4.

Fig. 2b schematically depicts a cross-sectional view of the support element 25 and the egg carrier 10, with the support element 25 configured on the floor 6. The support element 25 egg carrier 10 (slightly) resided therein, with a height difference H3. This height difference may be bridgeable by the hatched chicks, and may be selected from the range of 0.2-3 cm, such as 0.2-2 cm.

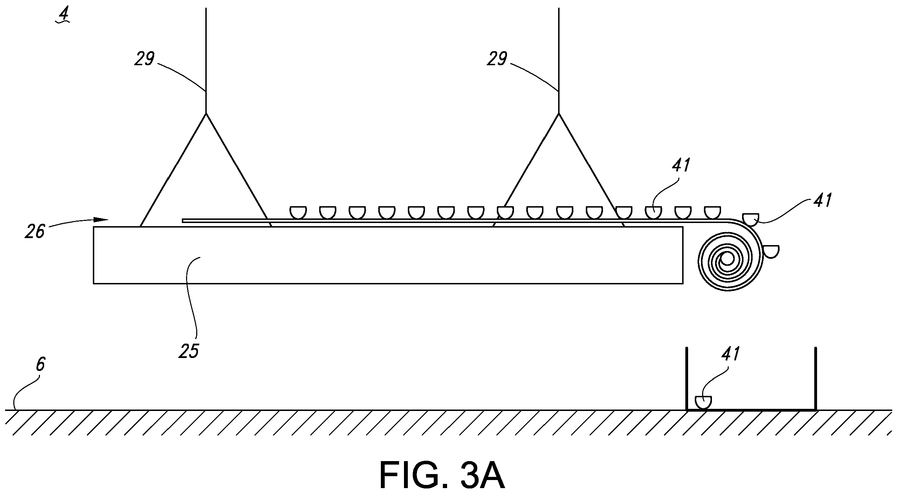

Fig 3A-B schematically depict some further embodiments of the invention. In embodiments, at least part of the egg transport system 20 (depicted in Fig 1) may be movable in a vertical direction. In embodiments, the egg transport system 20 may comprise a support element 25, wherein in specific embodiments the support element 25 comprises at least part of the track 26. Especially, the support element 25 is configured to support at least part of the egg carrier 10. In embodiments, the support element 25 is movable in the vertical direction. In embodiments, the poultry house 4 may comprise a suspension system 29 configured to suspend at least part of the system 1 at an adjustable height within the poultry house 4, including one or more of (a) on the floor 6, (b) working height, and (c) above working height, especially higher than 2 meters from the floor 6. In embodiments, the suspension system 29 may be configured to suspend the support element 25 at the adjustable height within the poultry house 4.

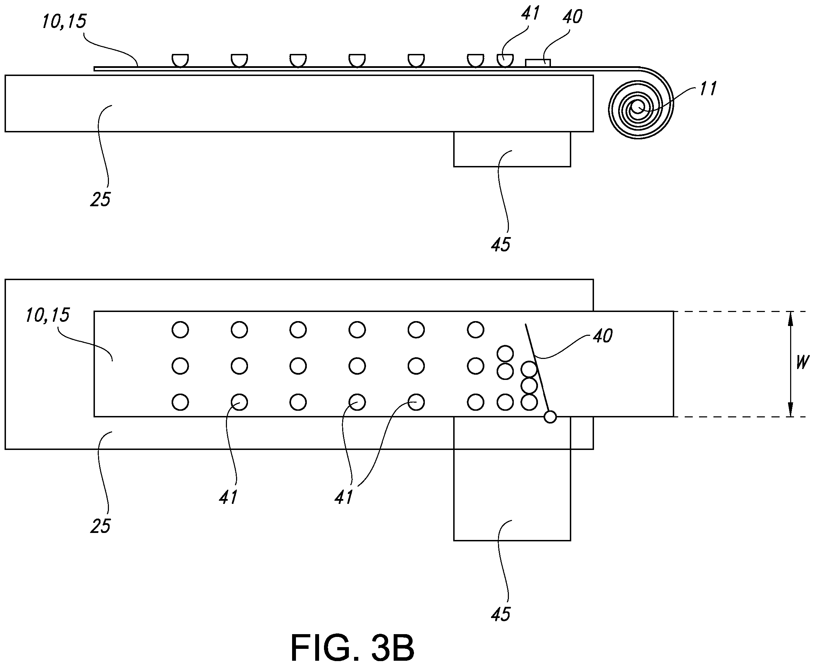

The method further comprises a waste removal stage, comprising removing possible available waste 41 on the egg carrier 10. In embodiments, the system 1 may be configured to move the egg carrier 10 in a downward direction to allow possible available waste 41 on the egg carrier 10 to be removed from the egg carrier 10 by gravitational force in a waste collection device 45 due to rolling up the egg carrier 10 as depicted in Fig 3A. In specific embodiments, the system 1 may further comprise a waste collection system 40, wherein the waste collection system 40 is configured to transfer waste 41 from the egg carrier 10 in a waste collection device 45 as depicted in Fig 3B. The waste collection system 40 may comprise a fixed element 40 that may guide the possible waste 41 from the egg carrier 10 into the waste collection device 45 by moving the egg carrier 10 towards element 40. Alternatively, element 40 may be movable and may actively swipe waste 41 into the waste collection device 45.

In embodiments, the method may comprise that after the waste removal stage the egg transport system 20 may be lifted above working height until the next loading stage is commencing.

During use of the system, the system 1 may comprise the support element 25. In embodiments, the support element 25 may be used at a first height h1 during the waste removal stage, and wherein after the waste removal stage, the support element 25 may be raised in height at a second height h2, wherein h2>h1, and wherein the first height h1 is selected from the range of 60-120 cm above the floor 6, wherein the first height h1 is defined as the height of the track 26 over the floor 6.

In embodiments, the egg placing zone may be defined by a length L (indicated in Figs. 1a-1c) and a width W (indicated in Fig. 3b). In embodiments, L may be in the range of at least 30 cm, like at least 50 cm. In embodiments, L may be at maximum 150 cm, like at maximum 125 cm, such as at maximum 120 cm. In embodiments, L may be in the range of 30-125 cm, like 30-120 cm, such as especially in the range of 50-100 cm. However, other dimensions may also be possible.

In embodiments, W may be in the range at least 30 cm, such as at least 50 cm. In embodiments, W may be at maximum 150 cm, like at maximum 125 cm, such as at maximum 120 cm. In embodiments, W may be in the range of 30-125 cm, like 30-120 cm, especially in the range of 50-100 cm. However, other dimensions may also be possible.

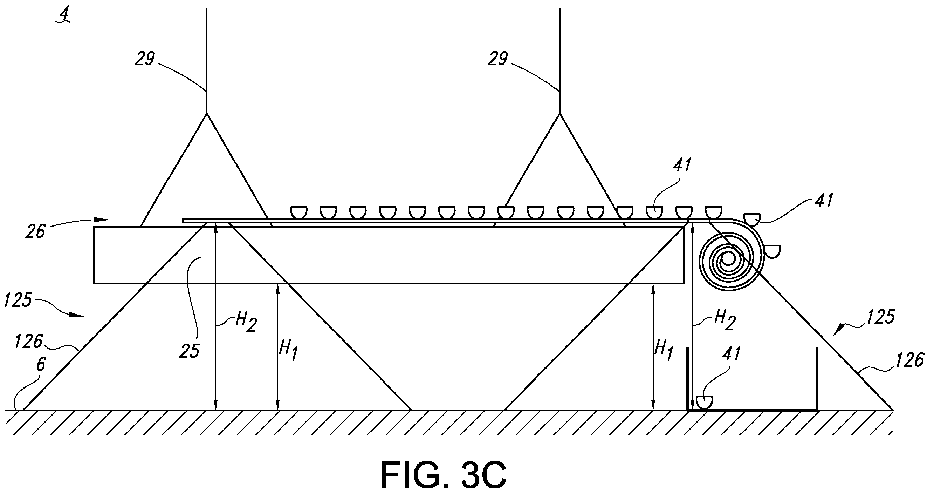

Figs. 3c-3g schematically depict some further aspects. As indicated above, the support element 25 may rest on a second support element 125. Such second support element 125 may also facilitate a fixation of the support element 25 in at least one horizontal direction, more especially in two perpendicular horizontal directions. One or more second support elements 125 may be applied. Especially, a plurality of second support elements 125 may be applied to provide a fixed vertical position of the support element 25 relative to the floor 6. The support element 25 may be lifted from the second support element 125 in a direction away from the floor 6. Hence, in embodiments the system 1 may further comprise one or more second support elements 125 configured to support the support element 25. In this way, the support element 25 does not need to rest on the floor 6 and is configured at a height H1 over the floor 6. This may increase useful area in an animal residence, such as a poultry house.

Alternatively or additionally, a bridging element 126 may be used to bridge the height of the support element 25 to the floor 6. This may facilitate the descent of the hatched chicks from the support element 25 to the floor 6. Such bridging element 126 may comprise stairs or may be slanted (in Fig. 3c a slanted example is schematically depicted). In this way, about the height H2 the support element 25, more especially the conveyor belt 15 is over the floor, may be bridged by the hatched chicks.

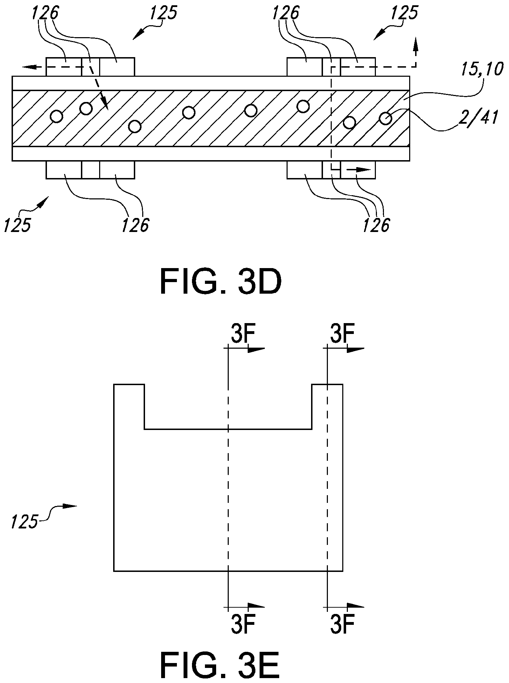

In specific embodiments, the second support element 125 may comprise the bridging element 126, as schematically depicted in Fig. 3c and also in Fig. 3d.

Note that in embodiments the hatching stage as well as a cleaning stage may be executed when the support 25 is configured on the floor 6, and thereafter, the support may be elevated and configured on a second support 125, with optionally the bridging element(s) 126. Hence, in embodiments wherein the support is supported by the second support(s) the support 25 may essentially be free from waste 41. Fig. 3c may thus schematically depict several aspects.

Fig. 3d schematically depicts a top view, also showing with the dashed lines the routes hatched chicks may follow to get at the floor. The features on the egg carrier 10 may refer to eggs 2 or waste 41.

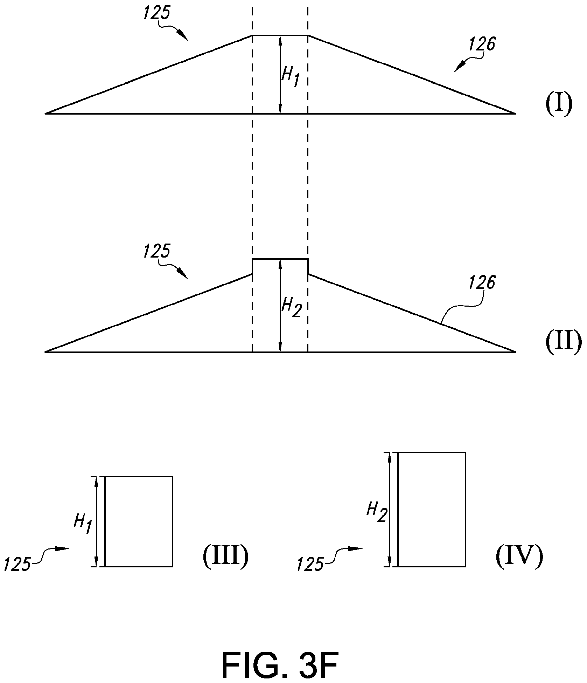

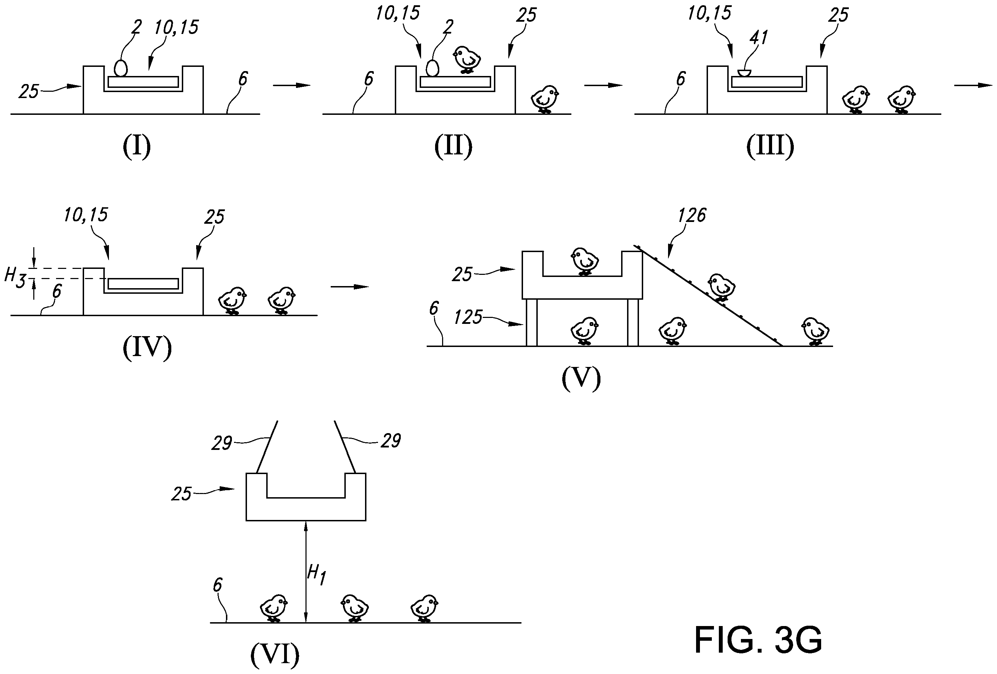

Fig. 3e schematically depicts a cross-sectional view of a possible second support element 125. The lower middle part at the top may be used to receive the support element 25. The tops of the higher edges may in embodiments be at essentially the same height as the top of the support element. Other shapes of the second support element 125 may also be possible, see e.g. also the second support element 125 in Fig. 3g, embodiment V, wherein e.g. a frame or tubes may be applied. The two dashed lines referring to Fig. 3f refer to possible cross-sections.

Embodiment I in Fig. 3f may e.g. be a cross-section of the second support element 125 from the left cross-section in Fig. 3e. Embodiment II in Fig. 3f may e.g. be a cross-section of the second support element 125 from the left cross-section in Fig. 3e. However, it may also be that the middle part has no slanted edges. In such embodiments of the embodiment schematically depicted in Fig. 3e, the cross-section as schematically depicted in Fig. III may be obtained. It may also be that the second support element 125 has in embodiments no slanted faces for bridging the height H2, nor for the middle part; in such embodiments the two cross-sections indicated in Fig. 3e may be depicted in embodiments III and IV of Fig. 3f.

Fig. 3g schematically depict several configurations of the support element 25 relative to the floor 6. In a first stage I, the support element 25 may be on the floor 6, and the eggs may be configured on the egg carrier 10, such as a conveyor belt 15. In a second stage II, which may be a hatching stage, the eggs may hatch, and the support element 25 may be on the floor 6, and the hatched eggs and unhatched eggs may be configured on the egg carrier 10, such as a conveyor belt 15. In a third stage III, essentially all eggs may have hatched, and the chicks may have left the support element 25, e.g. for looking for food and/or water; the support element 25 may be on the floor 6. In a fourth stage IV, the egg carrier 10 may be cleaned from waste; the support element 25 may be on the floor 6. However, the support element 25 may also be configured over the floor 6. In a fifth stage V, the egg carrier 10 may have been cleaned from waste and may optionally have been partially removed from the support element 25, e.g. by rolling up (see also above). The support element 25 may be over the floor 6 but accessible for the hatched chicks via the bridging element 126. This leads to an increased area for the chicks, as below and on the support element 25 the hatched chicks may move or stay. The support element 25 may be supported by one or more second support element 125, which may e.g. comprise tubular elements. Alternative to the fifth stage, or after the fifth stage, in a sixth stage VI the support element 25 may even be more elevated, such as at a height of at least 2 m over the floor 6 (and not accessible to the hatched chicks).

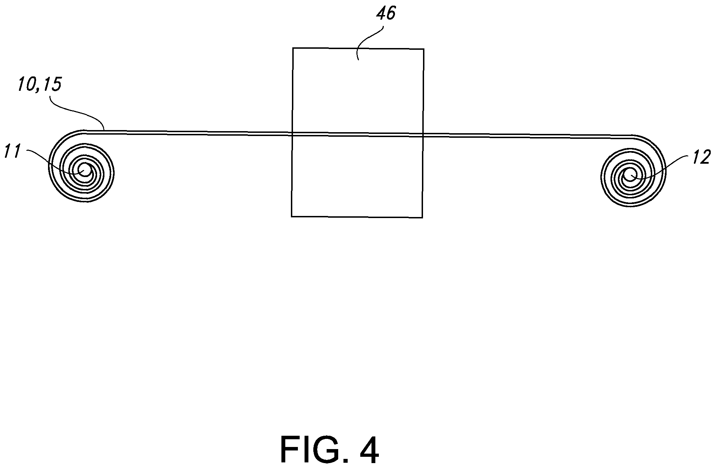

Fig 4 schematically depicts cleaning of the egg carrier. In embodiments, the method may further comprise a cleaning stage, comprising cleaning of the egg carrier 10 by a cleaning device 46. In embodiments, the system 1 may further comprise a cleaning device 46 configured for cleaning the egg carrier. In embodiments, the egg carrier 10 may be transferred from the first carrier support 11, cleaned by the cleaning device 46 and then rolled onto a second carrier support 12. The egg carrier 10 may be re-used while maintaining high hygienic standards.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. **In** a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage. In yet a further aspect, the invention (thus) provides a software product, which, when running on a computer is capable of bringing about (one or more embodiments of) the method as described herein.

There is also disclosed a control system that may control the device, apparatus, or system, or that may execute the herein described method or process. Yet further, there is also disclosed a computer program product, when running on a computer which is functionally coupled to or comprised by the device, apparatus, or system, controls one or more controllable elements of such device, apparatus, or system.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A system (1) for incubating and hatching eggs (2) wherein the system (1) comprises: (i) a first zone (110), (ii) an egg carrier (10), (iii) an egg transport system (20), (iv) an egg transferring system (30) and (v) a first carrier support (11) configured in the first zone (110), wherein:
- the first zone (110) comprises an egg placing zone (111);
- the egg carrier (10) is configured to carry the eggs (2) during incubation and hatching; wherein the egg carrier (10) comprises a conveyor belt (15), wherein the egg carrier (10) is a linear egg carrier comprising a beginning and an end, wherein the egg carrier (10) is not circular defining an infinite loop;
- the egg transport system (20) is configured to move in an operational mode of the system (1) the egg carrier (10) along a track (26) from the first zone (110) to a second zone (120);
- the egg transferring system (30) is configured to transfer eggs (2) from an egg support element (3) onto the egg carrier (10) in the egg placing zone (111), wherein one or more of the eggs (2) is at least partly in direct contact with the egg carrier (10); and
- wherein during the operational mode, the system (1) is configured to unroll the egg carrier (10) from the first carrier support (11).

2. The system according to claim 1, wherein the system is configured to roll the egg carrier up on the first carrier support.

3. The system according to any one of the preceding claims, wherein the system comprises a second carrier support configured in the second zone, wherein the system is configured to roll the egg carrier on the second carrier support in the operational mode,

4. The system (1) according to any one of the preceding claims, wherein at least part of the egg transport system (20) is movable in a vertical direction; wherein the egg transport system (20) comprises a support element (25), wherein the support element (25) is configured to support at least part of the egg carrier (10), and wherein the support element (25) is movable in the vertical direction.

5. The system (1) according to any of the preceding claims, wherein the system (1) is configured to move the egg carrier (10) in a downward direction to allow possible available waste (41) on the egg carrier (10) to be removed from the egg carrier (10) by gravitational force in a waste collection device (45).

6. The system (1) according to any of the preceding claims, wherein the system (1) further comprises a waste collection system (40), wherein the waste collection system (40) is configured to transfer waste (41) in a waste collection device (45).

7. The system (1) according to any of the preceding claims, wherein the egg transferring system (30) comprises a plurality of movable suction units (31) to individually lift eggs (2) from the egg support element (3), and transfer the individual eggs (2) to the egg carrier (10).

8. The system (1) according to any of the preceding claims, wherein the system (1) is configured to execute a plurality of loading stages, wherein each loading stage comprises a transferring action and a moving action, wherein in the first zone (110) a part of the egg carrier (10) is provided with a plurality of eggs (2) during the transferring action, and the part of the egg carrier (10) is moved in a direction of the second zone (120) during the moving action, whereby a next part of the egg carrier (10) is introduced in the first zone (110); wherein the egg transferring system (30) further comprises a movable barrier (32) that is configured to prevent eggs (2) on the egg carrier (10) from rolling back into the first zone (110); wherein a movement of the barrier (32) is mechanically coupled to a movement of the egg carrier (10).

9. The system (1) according to any of the preceding claims, wherein the egg placing zone (111) is defined by a length L and a width W, wherein L is in the range of 30-125 cm, and W is in the range of 30-125 cm; wherein the egg carrier (10) and the support element (25) comprise a linear shape in a horizontal plane; wherein the system (1) further comprises a cleaning device (46) configured for cleaning the egg carrier (10); wherein the conveyor belt (15) comprises polypropylene.

10. The system (1) according to any of the preceding claims, wherein the system (1) comprises a sensor (50) functionally connected to a control system (90), wherein the sensor (50) is configured to sense a parameter (51) and to generate a related sensor signal (55), wherein the control system (90) is configured to execute one or more of the following actions: (i) send the related sensor signal (55) to a remote device (100), and (ii) control the system (1) in dependence of the sensor signal (55), wherein the parameter (51) comprises one or more parameters selected from the group consisting of an ambient temperature, an ambient humidity, a light intensity, a CO₂ level, an egg shell temperature, number of chicks, and chick behavior.

11. A poultry house (4) comprising the system (1) according to any one of the preceding claims.

12. The poultry house (4) according to claim 11, wherein the poultry house (4) comprises a suspension system (29) configured to suspend at least part of the system (1) at an adjustable height within the poultry house (4); the poultry house (4) further comprising the support element (25) as defined in claim 5, wherein the suspension system (29) configured to suspend the support element (25) at the adjustable height within the poultry house (4).

13. An egg brooding method, wherein the method comprises:
- providing a system (1) according to any one of the claims 1-10;
- placing a plurality of individual eggs (2) onto the egg carrier (10), wherein one or more of the eggs (2) is at least partly in direct contact with the egg carrier (10);
- allowing the eggs (2) to incubate and hatch; and
- removing possible available waste (41) on the egg carrier (10).

14. The method according to claim 13, wherein the egg carrier (10) is supported by a support element (25), wherein a height of the support element (25) is adjustable; wherein the incubating and hatching stage is performed in a poultry house (4) as defined in claim 12; wherein after the waste removal stage the egg transport system (20) is lifted above working height until the next loading stage is commencing.

15. The method according to claims 13-14, wherein the method comprises a pre-incubation stage and a transportation stage prior to the loading stage, wherein the pre-incubation stage comprises brooding the eggs (2) for a maximum of 19 days outside of the poultry house (4) as defined in claim 12, and wherein the transportation stage comprises transporting the eggs (2) to the poultry house (4); wherein the method comprises: performing the incubating and the hatching of the eggs (2) on the egg carrier (10) at a height H from a floor (6), wherein H≤50cm; the method further comprising a cleaning stage, comprising cleaning of the egg carrier (10) by a cleaning device (46).

## Patentansprüche

1. System (1) zum Bebrüten und Ausbrüten von Eiern (2), wobei das System (1) Folgendes umfasst: (i) eine erste Zone (110), (ii) einen Eierträger (10), (iii) ein Eiertransportsystem (20), (iv) ein Eierübertragungssystem (30) und (v) eine erste Trägerstütze (11), die in der ersten Zone (110) ausgebildet ist, wobei:
- die erste Zone (110) eine Eierplatzierungszone (111) umfasst;
- der Eierträger (10) dazu ausgebildet ist, die Eier (2) während des Bebrütens und Ausbrütens zu tragen; wobei der Eierträger (10) ein Förderband (15) umfasst, wobei der Eierträger (10) ein linearer Eierträger ist, der einen Anfang und ein Ende umfasst, wobei der Eierträger (10) nicht kreisförmig, eine unendliche Schleife definierend, ist;
- das Eiertransportsystem (20) dazu ausgebildet ist, in einem Betriebsmodus des Systems (1) den Eierträger (10) entlang einer Bahn (26) von der ersten Zone (110) zu einer zweiten Zone (120) zu bewegen;
- das Eierübertragungssystem (30) dazu ausgebildet ist, Eier (2) von einem Eierstützelement (3) auf den Eierträger (10) in der Eierplatzierungszone (111) zu übertragen, wobei eines oder mehrere der Eier (2) zumindest teilweise in direktem Kontakt mit dem Eierträger (10) steht; und
- wobei während des Betriebsmodus das System (1) dazu ausgebildet ist, den Eierträger (10) von der ersten Trägerstütze (11) abzurollen.

2. System nach Anspruch 1, wobei das System dazu ausgebildet ist, den Eierträger auf die erste Trägerstütze aufzurollen.

3. System nach einem der vorhergehenden Ansprüche, wobei das System eine zweite Trägerstütze umfasst, die in der zweiten Zone ausgebildet ist, wobei das System dazu ausgebildet ist, den Eierträger in dem Betriebsmodus auf die zweite Trägerstütze aufzurollen.

4. System (1) nach einem der vorhergehenden Ansprüche, wobei zumindest ein Teil des Eiertransportsystems (20) in einer vertikalen Richtung beweglich ist; wobei das Eiertransportsystem (20) ein Stützelement (25) umfasst, wobei das Stützelement (25) dazu ausgebildet ist, zumindest einen Teil des Eierträgers (10) zu stützen, und wobei das Stützelement (25) in der vertikalen Richtung beweglich ist.

5. System (1) nach einem der vorhergehenden Ansprüche, wobei das System (1) dazu ausgebildet ist, den Eierträger (10) in einer Abwärtsrichtung zu bewegen, um zu ermöglichen, dass eventuell vorhandener Abfall (41) auf dem Eierträger (10) von dem Eierträger (10) durch Schwerkraft in einer Abfallsammelvorrichtung (45) beseitigt wird.

6. System (1) nach einem der vorhergehenden Ansprüche, wobei das System (1) ferner ein Abfallsammelsystem (40) umfasst, wobei das Abfallsammelsystem (40) dazu ausgebildet ist, Abfall (41) in eine Abfallsammelvorrichtung (45) zu übertragen.

7. System (1) nach einem der vorhergehenden Ansprüche, wobei das Eierübertragungssystem (30) mehrere bewegliche Saugeinheiten (31) umfasst, um Eier (2) einzeln von dem Eierstützelement (3) anzuheben und die einzelnen Eier (2) auf den Eierträger (10) zu übertragen.

8. System (1) nach einem der vorhergehenden Ansprüche, wobei das System (1) dazu ausgebildet ist, mehrere Beladungsstufen auszuführen, wobei jede Beladungsstufe eine Übertragungsaktion und eine Bewegungsaktion umfasst, wobei während der Übertragungsaktion in der ersten Zone (110) ein Teil des Eierträgers (10) mit mehreren Eiern (2) versehen wird, und während der Bewegungsaktion der Teil des Eierträgers (10) in Richtung der zweiten Zone (120) bewegt wird, wodurch ein nächster Teil des Eierträgers (10) in die erste Zone (110) eingeführt wird; wobei das Eierübertragungssystem (30) ferner eine bewegliche Barriere (32) umfasst, die dazu ausgebildet ist, zu verhindern, dass Eier (2) auf dem Eierträger (10) in die erste Zone (110) zurückrollen; wobei eine Bewegung der Barriere (32) mechanisch mit einer Bewegung des Eierträgers (10) gekoppelt ist.

9. System (1) nach einem der vorhergehenden Ansprüche, wobei die Eierplatzierungszone (111) durch eine Länge L und eine Breite W definiert ist, wobei L im Bereich von 30-125 cm liegt und W im Bereich von 30-125 cm liegt; wobei der Eierträger (10) und das Stützelement (25) in einer horizontalen Ebene eine lineare Form umfassen; wobei das System (1) ferner eine Reinigungsvorrichtung (46) umfasst, die zum Reinigen des Eierträgers (10) ausgebildet ist; wobei das Förderband (15) Polypropylen umfasst.

10. System (1) nach einem der vorhergehenden Ansprüche, wobei das System (1) einen Sensor (50) umfasst, der funktionell mit einem Steuersystem (90) verbunden ist, wobei der Sensor (50) dazu ausgebildet ist, einen Parameter (51) zu erfassen und ein zugehöriges Sensorsignal (55) zu erzeugen, wobei das Steuersystem (90) dazu ausgebildet ist, eine oder mehrere der folgenden Aktionen auszuführen: (i) Senden des zugehörigen Sensorsignals (55) an eine entfernte Vorrichtung (100), und (ii) Steuern des Systems (1) in Abhängigkeit von dem Sensorsignal (55), wobei der Parameter (51) einen oder mehrere Parameter umfasst, die aus der Gruppe ausgewählt sind, die aus einer Umgebungstemperatur, einer Umgebungsfeuchtigkeit, einer Lichtintensität, einem CO₂-Pegel, einer Eierschalentemperatur, einer Anzahl von Küken und einem Kükenverhalten besteht.

11. Geflügelhaus (4), umfassend das System (1) nach einem der vorhergehenden Ansprüche.

12. Geflügelhaus (4) nach Anspruch 11, wobei das Geflügelhaus (4) ein Aufhängungssystem (29) umfasst, das dazu ausgebildet ist, zumindest einen Teil des Systems (1) in einer einstellbaren Höhe innerhalb des Geflügelhauses (4) aufzuhängen; wobei das Geflügelhaus (4) ferner das Stützelement (25) nach Anspruch 5 umfasst, wobei das Aufhängungssystem (29) dazu ausgebildet ist, das Stützelement (25) innerhalb des Geflügelhauses (4) in der einstellbaren Höhe aufzuhängen.

13. Eierbrutverfahren, wobei das Verfahren Folgendes umfasst:
- Bereitstellen eines Systems (1) nach einem der Ansprüche 1-10;
- Platzieren mehrerer einzelner Eier (2) auf dem Eierträger (10), wobei eines oder mehrere der Eier (2) zumindest teilweise in direktem Kontakt mit dem Eierträger (10) stehen;
- Ermöglichen, dass die Eier (2) bebrütet und ausgebrütet werden; und
- Beseitigen von eventuell vorhandenem Abfall (41) auf dem Eierträger (10).

14. Verfahren nach Anspruch 13, wobei der Eierträger (10) durch ein Stützelement (25) gestützt wird, wobei eine Höhe des Stützelements (25) einstellbar ist; wobei die Bebrütungs- und Ausbrütungsstufe in einem Geflügelhaus (4) nach Anspruch 12 durchgeführt wird; wobei nach der Abfallbeseitigungsstufe das Eiertransportsystem (20) über eine Arbeitshöhe angehoben wird, bis die nächste Beladungsstufe beginnt.

15. Verfahren nach den Ansprüchen 13-14, wobei das Verfahren eine Vor-Bebrütungsstufe und eine Transportstufe vor der Beladungsstufe umfasst, wobei die Vor-Bebrütungsstufe die Brut der Eier (2) für maximal 19 Tage außerhalb des Geflügelhauses (4) nach Anspruch 12 umfasst, und wobei die Transportstufe Transportieren der Eier (2) zu dem Geflügelhaus (4) umfasst; wobei das Verfahren Folgendes umfasst: Durchführen des Bebrütens und des Ausbrütens der Eier (2) auf dem Eierträger (10) in einer Höhe H von einem Boden (6), wobei H≤50 cm; wobei das Verfahren ferner eine Reinigungsstufe umfasst, die Reinigen des Eierträgers (10) durch eine Reinigungsvorrichtung (46) umfasst.

## Revendications

1. Système (1) d'incubation et d'éclosion d'œufs (2), le système (1) comportant : (i) une première zone (110), (ii) un support (10) à œufs, (iii) un système (20) de transport d'œufs, (iv) un système (30) de transfert d'œufs et (v) un premier appui (11) de support configuré dans la première zone (110) :
- la première zone (110) comportant une zone (111) de mise en place d'œufs ;
- le support (10) à œufs étant configuré pour porter les œufs (2) pendant l'incubation et l'éclosion; le support (10) à œufs comportant une bande transporteuse (15), le support (10) à œufs étant un support à œufs linéaire comportant un début et une fin, le support (10) à œufs n'étant pas circulaire en définissant une boucle infinie ;
- le système (20) de transport d'œufs étant configuré pour déplacer, dans un mode opérationnel du système (1), le support (10) à œufs le long d'une piste (26) de la première zone (110) à une seconde zone (120) ;
- le système (30) de transfert **d'œufs** est configuré pour transférer des œufs (2) d'un élément (3) d'appui d'œufs jusque sur le support (10) à œufs dans la zone (111) de mise en place d'œufs, un ou plusieurs des œufs (2) étant au moins partiellement en contact direct avec le support (10) à œufs ; et
- pendant le mode opérationnel, le système (1) étant configuré pour dérouler le support (10) à œufs à partir du premier appui (11) de support.

2. Système selon la revendication 1, le système étant configuré pour enrouler le support à œufs sur le premier appui de support.

3. Système selon l'une quelconque des revendications précédentes, le système comportant un second appui de support configuré dans la seconde zone, le système étant configuré pour enrouler le support à œufs sur le second appui de support dans le mode opérationnel.

4. Système (1) selon l'une quelconque des revendications précédentes, au moins une partie du système (20) de transport d'œufs pouvant être déplacée dans une direction verticale; le système (20) de transport d'œufs comportant un élément (25) d'appui, l'élément (25) d'appui étant configuré pour soutenir au moins une partie du support (10) à œufs, et l'élément (25) d'appui pouvant être déplacé dans la direction verticale.

5. Système (1) selon l'une quelconque des revendications précédentes, le système (1) étant configuré pour déplacer le support (10) à œufs dans une direction descendante pour permettre à d'éventuels déchets (41) disponibles sur le support (10) à œufs d'être retirés du support (10) à œufs par force gravitationnelle dans un dispositif (45) de collecte de déchets.

6. Système (1) selon l'une quelconque des revendications précédentes, le système (1) comportant en outre un système (40) de collecte de déchets, le système (40) de collecte de déchets étant configuré pour transférer des déchets (41) dans un dispositif (45) de collecte de déchets.

7. Système (1) selon l'une quelconque des revendications précédentes, le système (30) de transfert d'œufs comportant une pluralité d'unités mobiles (31) d'aspiration servant à soulever individuellement des œufs (2) à partir de l'élément (3) d'appui d'œufs, et à transférer les œufs (2) individuels au support (10) à œufs.

8. Système (1) selon l'une quelconque des revendications précédentes, le système (1) étant configuré pour exécuter une pluralité de phases de chargement, chaque phase de chargement comportant une action de transfert et une action de déplacement, dans la première zone (110), une partie du support (10) à œufs étant munie d'une pluralité d'œufs (2) pendant l'action de transfert, et la partie du support (10) à œufs étant déplacée en direction de la seconde zone (120) pendant l'action de déplacement, une partie suivante du support (10) à œufs étant ainsi introduite dans la première zone (110); le système (30) de transfert d'œufs comportant en outre une barrière mobile (32) qui est configurée pour empêcher des œufs (2) se trouvant sur le support (10) à œufs de rouler en revenant dans la première zone (110); un mouvement de la barrière (32) étant couplé mécaniquement à un mouvement du support (10) à œufs.

9. Système (1) selon l'une quelconque des revendications précédentes, la zone (111) de mise en place d'œufs étant définie par une longueur L et une largeur W, L se situant dans la plage de 30 à 125 cm, et W se situant dans la plage de 30 à 125 cm; le support (10) à œufs et l'élément (25) d'appui constituant une forme linéaire dans un plan horizontal; le système (1) comportant en outre un dispositif (46) de nettoyage configuré pour nettoyer le support (10) à œufs; la bande transporteuse (15) comportant du polypropylène.

10. Système (1) selon l'une quelconque des revendications précédentes, le système (1) comportant un capteur (50) relié fonctionnellement à un système (90) de commande, le capteur (50) étant configuré pour détecter un paramètre (51) et pour générer un signal (55) de capteur associé, le système (90) de commande étant configuré pour exécuter une ou plusieurs des actions suivantes : (i) envoyer le signal (55) de capteur associé à un dispositif distant (100), et (ii) commander le système (1) en fonction du signal (55) de capteur, le paramètre (51) comportant un ou plusieurs paramètres choisis dans le groupe constitué d'une température ambiante, d'une humidité ambiante, d'une intensité lumineuse, d'un niveau de CO₂, d'une température de coquilles d'œufs, d'un nombre de poussins et d'un comportement des poussins.

11. Poulailler (4) comportant le système (1) selon l'une quelconque des revendications précédentes.

12. Poulailler (4) selon la revendication 11, le poulailler (4) comportant un système (29) de suspension configuré pour suspendre au moins une partie du système (1) à une hauteur réglable à l'intérieur du poulailler (4); le poulailler (4) comportant en outre l'élément (25) d'appui tel que défini dans la revendication 5, le système (29) de suspension étant configuré pour suspendre l'élément (25) d'appui à la hauteur réglable à l'intérieur du poulailler (4).

13. Procédé de couvaison d'œufs, le procédé comportant les étapes consistant à :
- mettre en place un système (1) selon l'une quelconque des revendications 1 à 10 ;
- placer une pluralité d'œufs (2) individuels sur le support (10) à œufs, un ou plusieurs des œufs (2) étant au moins partiellement en contact direct avec le support (10) à œufs ;
- laisser les œufs (2) couver et éclore ; et
- retirer d'éventuels déchets (41) disponibles sur le support (10) à œufs.

14. Procédé selon la revendication 13, le support (10) à œufs étant soutenu par un élément (25) d'appui, une hauteur de l'élément (25) d'appui étant réglable; la phase d'incubation et d'éclosion étant réalisée dans un poulailler (4) tel que défini dans la revendication 12; après la phase d'enlèvement de déchets, le système (20) de transport d'œufs étant soulevé au-dessus de la hauteur de travail jusqu'à ce que la phase de chargement suivante commence.

15. Procédé selon les revendications 13 à 14, le procédé comportant une phase de pré-incubation et une phase de transport avant la phase de chargement, la phase de pré-incubation comportant la couvaison des œufs (2) pendant un maximum de 19 jours à l'extérieur du poulailler (4) tel que défini dans la revendication 12, et la phase de transport comportant le transport des œufs (2) jusqu'au poulailler (4) ; le procédé comportant : la réalisation de l'incubation et de l'éclosion des œufs (2) sur le support (10) à œufs à une hauteur H d'un sol (6), où H≤50 cm ; le procédé comportant en outre une phase de nettoyage, comportant le nettoyage du support (10) à œufs par un dispositif (46) de nettoyage.
